# EUROPEAN PATENT SPECIFICATION

(11) **EP 0 402 146 B1**
(45) Date of publication and mention of the grant of the patent: **13.09.2000**
(21) Application number: 90306219.8
(22) Date of filing: 07.06.1990
(51) Int. Cl.: G09F 9/35, G02F 1/1335

(54) **Prismatic illuminator for flat panel display**
Prismatische Beleuchtungseinrichtung für flachen Bildschirm
Dispositif d'éclairage prismatique pour un écran d'affichage plat

(30) Priority: 08.06.1989 US 363645
(43) Date of publication of application: 12.12.1990
(60) Divisional application: 99120006.4
(73) Proprietor: GENERAL ELECTRIC COMPANY, Schenectady, NY 12345 (US)
(72) Inventor: Henkes, John Lawrence, Latham, New York 12110 (US)
(74) Representative: Goode, Ian Roy

(56) References cited:
- EP-A- 0 006 450
- EP-A- 0 167 721
- EP-A- 0 275 858
- WO-A-84/04838
- DE-A- 3 806 421
- US-A- 3 464 133

## Description

The present invention relates to flat panel displays, such as liquid crystal displays and the like, and, more particularly, to a novel prismatic device for efficiently and uniformly illuminating a transmissive flat panel display.

It is well known that, in order to efficiently back-light a transmissive flat panel display, such as a liquid crystal display and the like, a planar radiator is required at the rear of that display. Typically, the light source is a fluorescent lamp which is usually placed in a reflective cavity, where the cavity size must be relatively large to allow the light from the source to be sufficiently integrated to substantially uniformly illuminate the rear surface of the flat panel display. Generally, these cavities are very much larger and thicker than is desirable for illuminating the relatively thin displays. It is therefore highly desirable to reduce the overall size of an illuminator utilized for uniformly and efficiently illuminating a flat panel display, such as a liquid crystal display and the like.

EP-A-0 167 721 discloses an edge-lighting type light diffuser which has a plane of light incidence, a light transmitting means and a plane of light emission. The light transmitting means is composed of a laminate of a plurality of light-transmissible plates. This structure is said to provide a light diffuser capable of uniform plane illumination usable for sign boards, large-sized display devices, display devices for various types of machinery, and liquid crystal devices.

EP-A-0 006 450 discloses a large-area light source. To provide for uniform output throughout the area of the light source, particularly to provide a background illuminating surface for liquid crystal display, and especially adapted for automotive application, the light-emitting surface is formed as a wedge-shaped body of transparent material, such as Plexiglas, with light being coupled thereinto at the wider side surface, the bottom surface of the wedge-shaped body having, preferably, a reflective, light dispersing layer or coating applied thereto, for example in the form of a white pigmented lacquer, white paper, a ceramic plate, or the like; an intermediate layer of light-transmissive material having an index of refraction less than the index of refraction of the body may be interposed between the surface of the body and the reflective coating of layer. The top surface of the body can be matte, for example formed by microgrooves extending transversely to the plane of the side surface through which light is coupled into the wedge-shaped body. The light can be coupled thereinto derived, for example, from an incandescent bulb.

The light which is coupled into the transparent wedge-shaped body is totally reflected at the opposite side surfaces. Total reflection also occurs at the respectively inclined major planes or surfaces depending on the angle of application of the light to wider side surface.

US-A-3,464,133 relates to display apparatus comprising a light reflecting surface and means to illuminate it. More especially it is concerned with display apparatus of the kind comprising a reflecting surface with a multiplicity of facets arranged in predetermined different orientations and means for illuminating the facets in predetermined variable manner so that an observer looking at said surface sees an effect of animation, or other desired effect.

The main object of the invention of this patent is said to be to provide a simple and compact form of display apparatus.

With this object in view, the patent describes an animation display apparatus wherein the reflecting surface is positioned immediately behind (from the observer's point of view) a slab of transparent material having non-parallel faces, the illuminating means being arranged to direct light into the thick edge of the slab.

The thick edge of the slab may be shaped in cross section perpendicular to the faces so as to achieve a desired illumination of the reflecting surface. It will, the patent states, commonly be desired to have a substantially uniform illumination over the whole or nearly the whole area of the rear face of the slab, such as cannot be obtained with a simple slab the section of which is a truncated right-angled triangle of small apical angle. This shaping of the thick edge may comprise bevelling where in a simple slab as just mentioned the plane of the thick edge meets that of one face. Thus for example a single or double plane bevel joining the thick edge and the rear face improves the uniformity of illumination over the rear face, through other shapings are possible.

The patent states that it will be appreciated that although certain rays (such as indicated in the patent) will be totally internally reflected at the front face of the slab, other rays will pass out of the front face in an obliquely upward direction and will be lost.

The present invention is as claimed in claim 1.

The features and advantages of the invention may be better understood from the following detailed description when considered in conjunction with the associated drawings, in which:
Figure 1 is a partially-sectionalized oblique view of a first prismatic illuminator embodying the invention, and of a flat panel display with which it is used;
Figures 2 and 2a are respective front and bottom views of the multifaceted prism utilized in the embodiment of Figure 1;

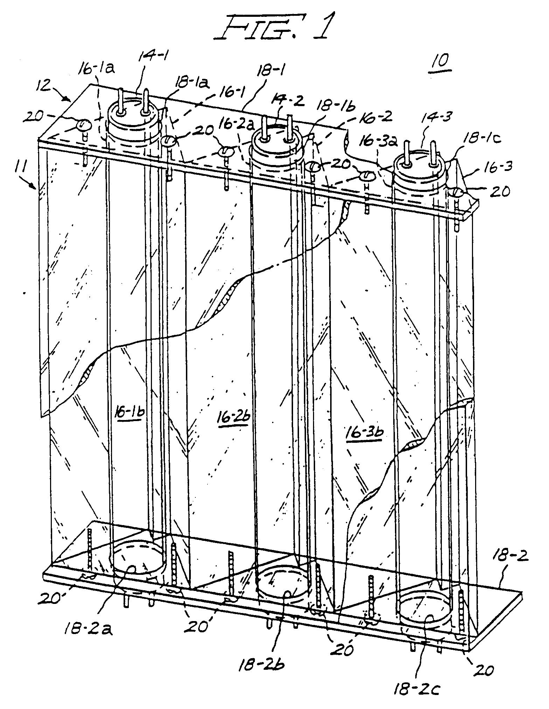

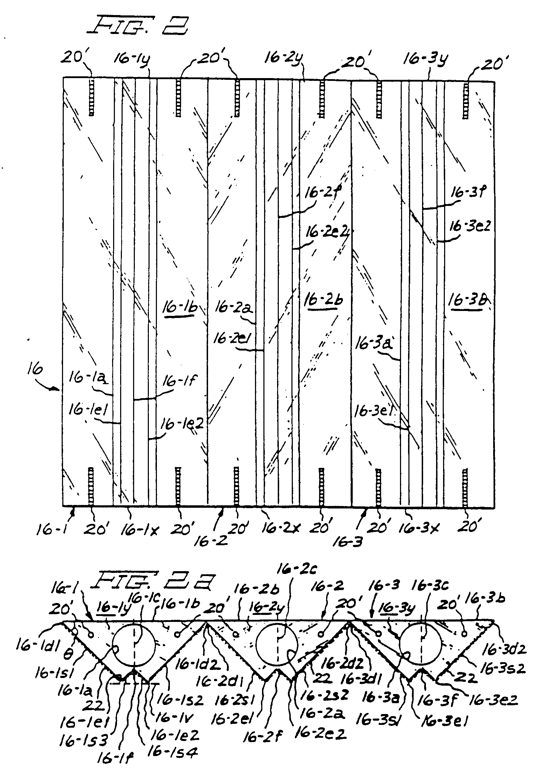

Referring initially to Figures 1, 2 and 2a, a display system 10 utilizes a flat panel display 11, such as a flat liquid crystal display (LCD) and the like, of transmissive form and receiving substantially uniform illumination from a first embodiment 12 of a prismatic illuminator in accordance with the principles of the present invention. Illuminator 12 utilizes at least one light source 14, each contained within an aperture 16a of an associated prism member 16; a front face 16b of each prism is juxtaposingly aligned with all other prism front faces, to provide a substantially planar surface from which the illumination is transmitted to display 11. A plurality n of elongated fluorescent lamp light sources (here, n=3 sources 14-1, 14-2 and 14-3) are utilized, with the lamps being placed with their axes substantially parallel to one another and to the illuminator front faces 16b. A like plurality n of prism members 16 are used. Accordingly, there are n=3 prism members 16-1, 16-2, 16-3, each elongated in the direction of the associated one of lamps 14-1, 14-2, or 14-3, with the lamp being placed within an axially-extended aperture 16-1a, 16-2a or 16-3a of the prism, and located parallel to the co-planar prism front faces 16-1b, 16-2b and 16-3b, respectively. The prism member bottom surfaces 16-1x, 16-2x and 16-3x are substantially coplanar to one another, substantially perpendicular to the front prism faces, and substantially parallel to the coplanar prism top surfaces 16-1y, 16-2y and 16-3y, which are also substantially perpendicular to the prism front faces. Top and bottom end members 18-1 and 18-2, respectively, are fastened with suitable fastening means 20 to suitable formations 20' in the prism top and bottom surfaces; it should be understood that the prism top and bottom surfaces, and therefore the planes of the fastening members 18, need not be substantially perpendicular to the prism front faces 16-ib, (where 1≤i≤n, and n is the number of sources/prisms, being 3 in the present example), although such substantially-perpendicular disposition may be quite useful in the retention of the adjacent display 11, and other parts of the structure. It will be seen that each of the substantially-rectangular flat top and bottom members 18 has a set of apertures, e.g. apertures 18-1a, 18-1b and 18-1c, closely passing the associated end of an associated lamp 14 therethrough, for lamp retention purposes. Additional lamp-retention means, such as resilient glue, rubber grommets and the like, can also be utilized.

Each prism member 16 (as best seen in the front view of Figure 2 and the top view of Figure 2a) is formed of a substantially transparent material, such as a plastic and the like. The cross-sectional shape of each of the illustrated prism members 16-i is that of an isosceles triangle with corner angle θ (here, θ ≈45°) and with the rear corner, opposite front face 16-ib, being inverted, about an inversion line 16i, so that the cross section is substantially W-shaped and symmetric about a prism member centerline 16-ic, orthogonal to each prism member front face 16-ib and substantially equally spaced from that prism member's opposite front corners 16-id1 and 16-id2. Each pair of prism side surfaces 16-is1 and 16-is2 converge towards the prism member centerline 16-ic but do not meet, terminating instead at a pair of substantially right-angle corners 16-ie1 and 16-ie2, equally spaced from both the prism member front surface 16-ib and centerline 16-ic. The prism member then has a pair of substantially-symmetrically-disposed minor side surfaces 16-is3 and 16-is4 (see the left-hand-most prism 16-1 of Figure 2a), which converge towards the prism centerline 16-ic forward of inversion line l6iv to meet at an inversion corner 16-if, which is typically a 90° corner, located upon the prism member centerline 16-ic Thus, each prism member 16-i is formed with four facets (faces 16-is1 through 16-is4), of angles selected so that, when coupled with the selection of the prism member material, cause total internal reflection of light incident upon those four prism surfaces. Thus, light from each lamp 14-i is reflected from the surfaces of the associated prism member 16-i to exit at single front surface 16-ib, which acts as a plane radiator. When the co-planar prism front surfaces 16-ib are viewed, this surface appears to contain and be filled with multiple images of the different portions of the surfaces of lamps 14. These images occur, and will be seen, due to the prism facet surfaces acting as mirrors and each reflecting a different portion of the lamp surface. Additional lamp light, not totally-internally-reflection at the surfaces, can be provided, after at least one reflection, by providing a coating 22 of the prism surfaces 16-is1 through 16-is4 with a suitable material. Such a material might be fumed magnesium oxide, although a more convenient coating is the reflecting material sold by Eastman Kodak as their coating material No 6080. Utilization of such extremely high reflectivity coatings will not significantly interfere with the total-internal-reflection at the prism member surfaces, but will reflect any non-internally-reflected light.

## Claims

1. An illuminator for substantially uniformly illuminating a flat panel display, comprising:
at least one light source having an elongated light producing region, and
at least one elongated prism member having a front external surface substantially parallel to the flat panel display, wherein
the light source is located within the elongated prism member and extends longitudinally in the same direction as the prism member,
the cross-sectional shape of the at least one prism member is that of an isosceles triangle with the rear corner opposite the front external surface being inverted about an inversion line so that the cross-sectional shape of the prism member is substantially W-shaped and symmetric about a prism member centerline orthogonal to said front external surface,
the prism member has an aperture formed therethrough, symmetric about said centerline, for receiving the associated light source, and
all of said other external surfaces of the prism member are coated with a reflecting coating so as to provide total reflection effectively internally of the prism member of all of the light from the light source which is incident on said other external surfaces of said prism member, restricting light output to said front external surface.

2. An illuminator as claimed in claim 1, wherein a plurality of light sources (14) are provided, each located within an associated prism member, the light sources and prism members being located in parallel with the front external surfaces of the prism members being co-planar, wherein the external front surfaces of the prism members are contiguous.

3. An illuminator as claimed in claim 1 or 2, further comprising means (18), for retaining each light source (14) in fixed relationship to the associated prism member (16).

4. An illuminator as claimed in claim 3, wherein said retaining means (18) includes an end member, affixable to the prism members, having an aperture for closely receiving and retaining an associated light source.

5. An illuminator as claimed in any preceding claim, wherein the distance between a pair of resulting rear prism corners (16e) is less than the light-source aperture diameter (16c).

6. An illuminator as claimed in any preceding claim, wherein each of the angles formed between the prism member front surface and the pair of major side surfaces is about 45°.

## Patentansprüche

1. Illuminator zum im wesentlichen gleichmäßigen Beleuchten eines Flachbildschirms, enthaltend:
wenigstens eine Lichtquelle, die einen langgestreckten, Licht erzeugenden Bereich aufweist, und
wenigstens ein langgestrecktes Prismenteil mit einer vorderen Aussenfläche, die im wesentlichen parallel zu dem Flachbildschirm ist, wobei
die Lichtquelle in dem langgestreckten Prismenteil angeordnet ist und sich longitudinal in der gleichen Richtung erstreckt wie das Prismenteil,
wobei die Querschnittsform von dem wenigstens einen Prismenteil diejenige von einem gleichschenkligen Dreieck ist, wobei die der vorderen Aussenfläche gegenüber liegende hintere Ecke um eine Kipplinie so umgekehrt ist, daß die Querschnittsform von dem Prismenteil im wesentlichen W-förmig ist und zu einer Mittellinie des Prismenteils senkrecht zur vorderen Aussenfläche symmetrisch ist,
wobei das Prismenteil eine dadurch gebildete Apertur hat, die symmetrisch zur Mittellinie ist, zur Aufnahme der zugeordneten Lichtquelle, und
alle anderen äusseren Oberflächen des Prismenteils mit einem reflekierenden Überzug überzogen sind, um so für eine Totalreflexion effektiv innerhalb des Prismenteils von dem gesamten Licht aus der Lichtquelle zu sorgen, das auf die anderen äusseren Oberflächen des Prismenteils auftrifft, wodurch die Lichtabgabe zu der vorderen Aussenfläche begrenzt ist.

2. Illuminator nach Anspruch 1, wobei mehrere Lichtquellen (14) vorgesehen sind, die jeweils in einem zugeordneten Prismenteil angeordnet sind, die Lichtquellen und Prismenteile parallel angeordnet sind, die vorderen Aussenflächen der Prismenteile koplanar sind und die vorderen Aussenflächen der Prismenteile zusammenhängend sind.

3. Illuminator nach Anspruch 1 oder 2, wobei eine Einrichtung (18) zum Haltern jeder Lichtquelle (14) in einer festen Relation zu dem zugeordneten Prismenteil (16) vorgesehen ist.

4. Illuminator nach Anspruch 3, wobei die Halterungseinrichtung (18) ein an den Prismenteilen betestigbares Endstück mit einer Apertur aufweist zum engen Aufnehmen und Haltern einer zugeordneten Lichtquelle.

5. Illuminator nach einem der vorstehenden Ansprüche, wobei der Abstand zwischen zwei entstehenden hinteren Prismenecken (16e) kleiner ist als der Aperturdurchmesser (16c) der Lichtquelle.

6. Illuminator nach einem der vorstehenden Ansprüche, wobei jeder Winkel, der zwischen der Vorderfläche eines Prismenteils und den zwei Hauptseitenflächen gebildet ist, etwa 45° beträgt.

## Revendications

1. Dispositif d'éclairage pour éclairer de manière substantiellement uniforme un afficheur plat, comprenant :
au moins une source lumineuse comportant une région allongée de production de lumière, et
au moins un prisme allongé ayant une surface frontale externe sensiblement parallèle à l'afficheur plat, dans lequel
la source lumineuse est située à l'intérieur du prisme allongé et s'étend longitudinalement dans la même direction que le prisme,
la forme en section du prisme au nombre d'au moins un est celle d'un triangle isocèle dont l'angle arrière opposé à la surface frontale externe est replié autour d'une ligne de pliage de sorte que la forme en section du prisme est sensiblement en W et symétrique par rapport à un axe du prisme qui est orthogonal à ladite surface frontale externe,
le prisme comporte une ouverture formée à travers ce dernier, symétrique par rapport audit axe, pour recevoir la source lumineuse associée, et
toutes les autres surfaces externes dudit prisme sont revêtues d'un revêtement réfléchissant afin d'assurer une réflexion totale effective, à l'intérieur du prisme, de la totalité de la lumière provenant de la source lumineuse qui est incidente sur lesdites autres surfaces externes dudit prisme, limitant la sortie de lumière jusqu'à ladite surface frontale externe.

2. Dispositif d'éclairage selon la revendication 1, dans lequel sont prévues une pluralité de sources lumineuses (14), situées chacune à l'intérieur d'un prisme associé, les sources lumineuses et les prismes étant positionnés parallèlement aux surfaces frontales externes des prismes qui sont coplanaires, dans lequel les surfaces frontales externes des prismes sont contiguës.

3. Dispositif d'éclairage selon la revendication 1 ou 2, comprenant en outre un moyen (18) servant à retenir chaque source lumineuse (14) en relation fixe avec le prisme associé (16).

4. Dispositif d'éclairage selon la revendication 3, dans lequel ledit moyen de retenue (18) comprend un élément d'extrémité, qui peut être attaché aux prismes, comportant une ouverture pour recevoir et retenir en montage serré une source lumineuse associée.

5. Dispositif d'éclairage selon l'une quelconque des revendications précédentes, dans lequel la distance séparant deux angles arrière résultants (16e) de prismes est inférieure au diamètre (16c) de l'ouverture pour source lumineuse.

6. Dispositif d'éclairage selon l'une quelconque des revendications précédentes, dans lequel chacun des angles formé entre la surface frontale de prisme et les deux surfaces latérales principales est d'environ 45°.
